# EUROPEAN PATENT APPLICATION

(11) **EP 2 607 009 A1**
(43) Date of publication of application: **26.06.2013**
(21) Application number: 11194317.1
(22) Date of filing: 19.12.2011
(51) Int. Cl.: B23K 9/028, F16L 13/02, G21C 1/00

(54) **Fillet welded assembly and method for its creation**

(71) Applicant: Integrita a Bezpecnost Ocelovych Konstrukcii, akciova spolocnost, v skratke IBOK, a.s., 831 07 Bratislava (SK); Centrum pre Vedu a Vyskum, s.r.o., 935 39 Mochovce (SK)
(72) Inventor: Vitásek, Martin, 821 09 Bratislava (SK); Szabo, Tomás, 917 01 Trnava (SK)
(74) Representative: Litvakova, Lenka

(57) **Abstract**

Fillet welded assembly, comprising an austenitic sleeve (2), and austenitic buttering (1) and a joint between the austenitic sleeve (2) and the austenitic buttering (1), in the area of an upper flange of a control socket at the reactor's upper cover, whereby the fillet welded joint is made to have at least 4 passes (4,5), wherein the first pass (4) connects directly the austenitic sleeve (2) with the austenitic buttering (1) and each further pass is welded on part of the surface of the austenitic sleeve (2) and/or the austenitic buttering (1) and/or on the part of the surface of welding metal of the preceding pass. The ratio of height (a) of the fillet welded joint on the side of the austenitic sleeve (2) to width (b) of the fillet welded joint on the side of the austenitic buttering (1) is 1:2 to 1:3.

## Description

### Technical Field

The present invention relates to a fillet welded joint between an austenitic sleeve and an austenitic buttering in the area of an upper flange of a control socket at the reactor's upper cover and a method of its creation. It belongs to the field of welding technology.

### Background Art

Currently, various solutions are known, in which welding, characterized by fewer number of passes, usually one to two, exceptionally up to three passes, is used. The ratio of the height of the fillet welded joint on the side of the austenitic sleeve to the width of the fillet welded joint on the side of the austenitic buttering is usually 1:1 in the known solutions. Divergence from this ratio, according to the current standards, is considered to be a defect of a welded joint (according to EN ISO 6520-1 and EN ISO 5817 the ratio of height of the fillet welded joint on the side of the austenitic sleeve to width of the fillet welded joint on the side of the austenitic buttering, different from 1:1, is referred to as error no. 512 - an excessive asymmetry of the fillet welded joint).

In currently known solutions, surface of the fillet welded joint is flat, i.e. without any altitude. According to standards EN ISO 6520-1 and EN ISO 5817 such altitude of the fillet weld is referred to as error no. 503 - an excessively strapped welded joint.

Disadvantage of the mentioned solutions is lower reliability, solidity and stability. This is connected with the higher probability of repeated failure of the fillet welded joint and the risk of lower lifetime of the welded joints resulting from that.

A defective fillet welded joint may result in that the moderator control rod at the reactor's upper cover will not pass through the control socket. Thereby a defective fillet welded joint weakens a protection during the nuclear reactor breakdown. Each repair of the fillet welded joint failure is financially extremely expensive, as it requires shutdown of the nuclear reactor.

In case of manual welding, which has so far been used, the welded joint is inaccurate, which is also connected with the higher probability of repeated failure of the fillet welded joint and the risk of lower lifetime of the welded joints resulting from that.

### Disclosure of the Invention

Mentioned deficiencies are to a considerable extent eliminated by the fillet welded joint between the austenitic sleeve and the austenitic buttering in the area of the upper flange of the control socket at the reactor's upper cover, the nature of is that the fillet welded joint is made to have at least 4 passes, wherein the first pass connects directly the austenitic sleeve with the austenitic buttering and each further pass is welded on part of the surface of the austenitic sleeve and/or the austenitic buttering and/or on part of the surface of a welding metal of the preceding pass.

The solution provides higher reliability, rigidity, solidity and stability of the fillet welded joint. Increased rigidity of the welding of the end of the austenitic sleeve against the austenitic buttering provides longer lifetime of the fillet welded joint under conditions of cyclic loading during operation of the nuclear reactor.

It is particularly advantageous, if the ratio of height of the fillet welded joint (i.e. the length of vertical cathetus of triangle inscribed in the fillet welded joint) on the side of the austenitic sleeve to width of the fillet welded joint (i.e. the length of horizontal cathetus of triangle inscribed in the fillet welded joint) on the side of the austenitic buttering is 1:2 to 1:3.

It is advantageous, if the surface of the fillet welded joint is strapped by at least 0,5 mm. Such altitude increases rigidity and thereby also bearing capacity of the fillet welded joint.

By ratios of 1:2 to 1:3 and by the altitude of the fillet welded joint, controlled shift of the end of the austenitic sleeve against the austenitic buttering occurs. Thereby, tensile prestress is created in the austenitic sleeve, which creates favourable conditions for stress and thereby extends its lifetime.

It is advantageous, if the last welded pass is arranged on parts of the welding metal surfaces of two preceding passes. Such ending increases total solidity and rigidity of the welded joint.

It is advantageous, especially for repair of the fillet welded joint of existing reactors, if after removing the original fillet welded joint, the austenitic buttering is re-melted by at least one sole pass before creation of the new fillet welded joint, which increases rigidity, solidity, stability and thereby also lifetime of the fillet welded joint.

It is suitable, if such fillet welded joint is created by a programmable orbital welding automat with exact control of welding parameters, such as welding current and its modulation, welding voltage, length of welding arc, rate of welding, rate of welding wire feed including its modulation. Advantage is the high accuracy and repeatability of parameters and process of welding.

### Brief Description of Drawings

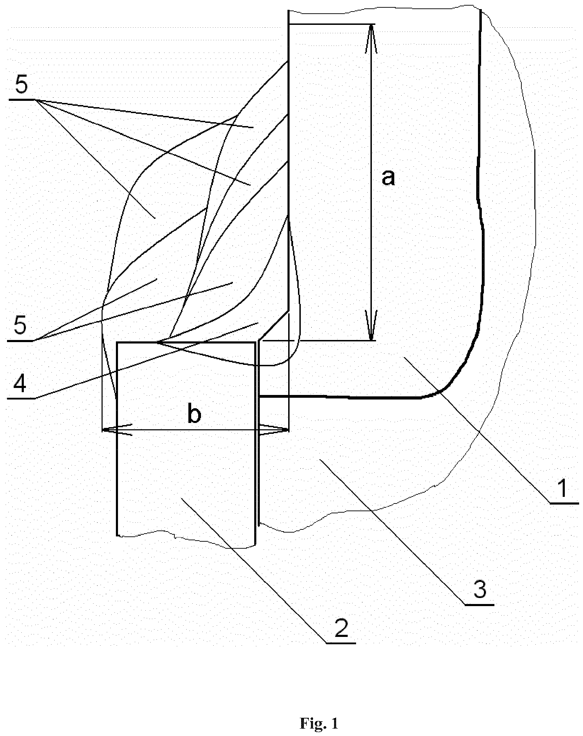

The invention is closely explained by the drawing. In Figure 1, the fillet welded joint according to the invention consisting of six passes, is shown.

### Example

In the nuclear power station, at the reactor's upper cover, the original fillet welded joint between the austenitic sleeve and the austenitic buttering in the area of the upper flange of the control socket was removed. Subsequently, the austenitic buttering was re-melted by three sole passes, without adding an additional welding wire. Subsequently, a new fillet welded joint (shown in Figure 1) was created in the site of the original fillet welded joint by the orbital welding automat. The upper fillet welded joint consists of six passes with adding of additional welding wire, wherein the first pass connects directly the austenitic sleeve with the austenitic buttering, the second, third and forth passes are welded on part of the austenitic buttering and on part of the preceding pass, the fifth pass is welded on part of the austenitic sleeve and on part of the fourth pass and the sixth pass is welded on part of the fourth and fifth passes. The ratio of height of the fillet welded joint on the side of the austenitic sleeve to width of the fillet welded joint on the side of the austenitic buttering is 3:7. For creation of each welding pass, orbital welding automat was set to the corresponding program.

## Claims

1. Fillet welded joint between an austenitic sleeve and an austenitic buttering in the area of an upper flange of a control socket at the reactor's upper cover **characterized in that** it is made to have at least 4 passes, wherein the first pass connects directly the austenitic sleeve with the austenitic buttering and each further pass is welded on part of the surface of the austenitic sleeve and/or the austenitic buttering and/or on the part of the surface of welding metal of the preceding pass.

2. Fillet welded joint according to claim 1 **characterized in that** the ratio of height of the fillet welded joint on the side of the austenitic sleeve to width of the fillet welded joint on the side of the austenitic buttering is 1:2 to 1:3.

3. Fillet welded joint according to claim 1 or 2 **characterized in that** the last welded pass is arranged on parts of the welding metal surfaces of two preceding passes.

4. Fillet welded joint according to any of precedent claims **characterized in that** the surface of the fillet welded joint is strapped by at least 0,5 mm.

5. Fillet welded joint according to any of precedent claims **characterized in that** the austenitic buttering is re-melted by at least one sole pass before creation of the fillet welded joint.

6. The method of creation of the fillet welded joint according to any of precedent claims **characterized in that** it is performed by a programmable orbital welding automat with exact control of welding parameters.
